Europäisches Patentamt

European Patent Office

Office européen des brevets

(11) Publication number: **0 217 564**
**A1**

(12) **EUROPEAN PATENT APPLICATION**

(21) Application number: **86306929.0**

(22) Date of filing: **09.09.86**

(51) Int. Cl.⁴: **H 04 N 7/00**
**H 04 N 5/76, H 04 N 11/00**
**H 04 N 9/79**

(30) Priority: **11.09.85 GB 8522456**

(43) Date of publication of application:
**08.04.87 Bulletin 87/15**

(84) Designated Contracting States:
**AT BE CH DE FR GB IT LI LU NL SE**

(71) Applicant: **ADPLATES LIMITED**
**29 Clerkenwell Road**
**London EC1M 5TA(GB)**

(72) Inventor: **Caine, Stephen Lester**
**27, Hewens Road**
**Hillingdon, Oxbridge(GB)**

(74) Representative: **Tillbrook, Christopher John et al,**
**c/o Reginald W. Barker & Co. 13, Charterhouse Square**
**London EC1M 6BA(GB)**

(54) A video signal transmitter and processor.

(57) A method of converting an analogue coloured video signal(I) into storable and readable signals, in which the coloured video signal I is converted from its source(11) signal into its component digital signals. Each digital signal is stored separately at a first storage facility 23 or 24 at a first location (14), the stored component signals being retrievably held for further processing. This method provides for transmission of a coloured video signal which may be displayed on a monitor (10) at the first location (14) are transmitted by land line (13) to a second storage facility (23 or 24) at a second location (15). The separate component signals being retrievably held in the second storage facility where they may be viewed by a monitor (12) at the second location. There is also disclosed apparatus for doing the above.

FIG.2.

EP 0 217 564 A1

## "A VIDEO SIGNAL TRANSMITTER AND PROCESSOR"

The invention relates to a method of transmission of a video picture and also to its storage and to video signal processors. By the term video signal processors is meant a device that takes the output signal from a video source, stores and processes the output signal and then uses the processed signal in any one of a number of ways.

It is known to have a black and white video source at one location which is convertible through telegraphics data base lines, to a second black and white video display at a second location. However, for display equipment having a facility for producing high resolution colour pictures, then in the present state of the art it is not possible to transmit a high quality colour picture from one video recorder to the other, through the present land lines. This is because land lines cannot transmit enough data quickly enough to form a colour picture at the receiver.

According to one aspect of the invention there is provided ... apparatus for enhancing the signal data transfer handling capabilities of an otherwise relatively low frequency range or bandwidth transmission line; including means for embracing and digesting a relatively high bandwidth or high density data mass, for example a high resolution colour television picture frame; means for breaking down the signal data into component parts of predetermined discrete coherent data blocks; means for arranging

the broken down data blocks into serial form; means for storing the serialised data components until transmission; means for sequentially accessing and unloading the data block store at prescribed intervals; means for sequentially transmitting the serialised data components in coherent blocks within the transmission capacity of a prescribed transmission line.

Such apparatus may be used in conjunction with ... a transmission line, which may be of low or restricted bandwidth capability, a receiver comprising a compartmented data store for receiving and storing in coherent accessible array the successive data blocks of coherent data, a data check for monitoring the integrity of coherent data blocks received and capable of initiating corrective, for example repetitive transmission, control action in the event of unacceptable signal degradation, means for rearranging the received serialised coherent data blocks and composing them into a unitary complex data block, representing a processed image, for example a high resolution colour image.

According to another aspect of the present invention there is provided a method of a converting analogue coloured video signal into a storable and readable format, in which the coloured picture video signal is converted from its source signal into its component digital signals each of which is stored separately at a first storage facility at a first location, the store component signals being retrievably held for further processing.

The coloured video source signal may be displayed on a monitor at the first location and preferably the stored component signals are transmitted from the first location by land line to a second storage facility at a second location, and said separate component signals being retrievably held in the second storage facility for further processing.

Preferably there is a video monitor at the second location and the component signals from the second store facility are processed for feeding to the second monitor to form a picture thereon.

Also according to the invention there is provided apparatus for processing a video signal from a video source and comprising:

(i)     store facilities for independent storage of each component signal of the coloured video source signal

(ii)    a store controller

(iii)   an arbitrator for overseeing store access

(iv)    a microprocessor for overall control of the store and low speed input and output of stored information, preferably low speed imput and output,

(v)     an output port from the store for display and transfer of component signals.

and     (vi)    an input port to store for reception of the source signal.

Preferably the imput port and output port are high speed ports. Preferably there is a digital analogue converter which is fed by the output port to generate signals for a monitor which can display stored video signals.

The present invention will be described by way of example and with reference to the accompanying drawings in which:

FIG 1 is a schematic diagram of a colour video transmission according to the present invention.

FIG 2 is a flow diagram of the video converter used in the colour transmission system.

FIG3 is a block diagram for the video converter.

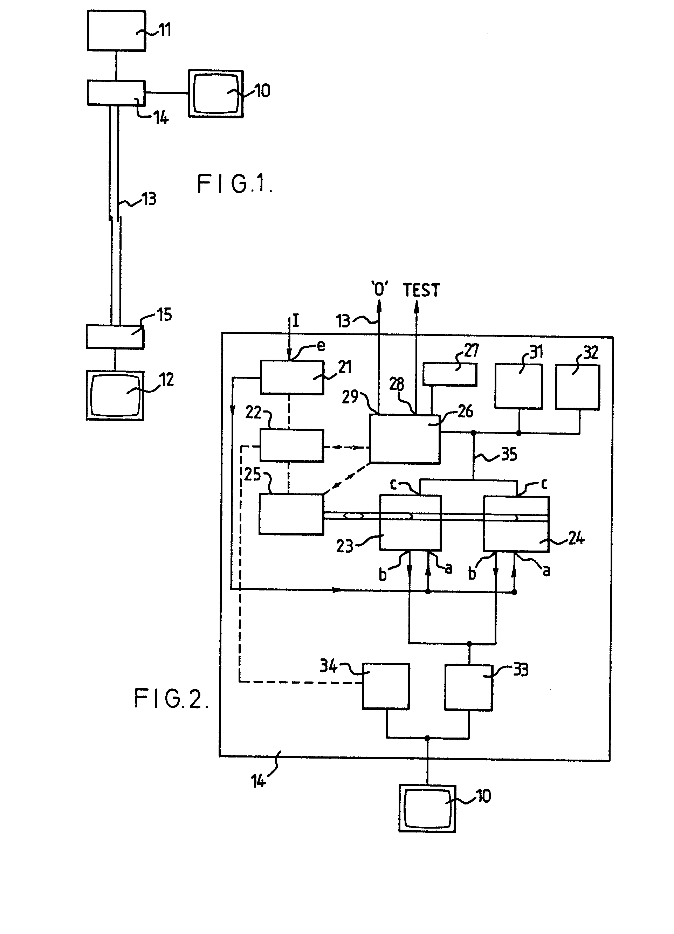

With reference to FIG 1, the invention in its simplest sense relates to a method and apparatus for sending a colour video picture signal, particularly for a high resolution picture, from a colour picture source 11 at a first location, down land lines to a display CRT monitor 12 at a second location. The signal from the colour picture Source 11 may be screened on a monitor 10 also at the first location. The monitors 10 and 12 are preferably, but not necessarily, broadcast standard 625 lines sets with an option for 525 line operations.

The video source and monitor are connected by a synchronous channel 13 to bisV21 capable of 64Kb rate (as per B T Kilostream land line), or similar international standard. A video signal processor 14 and 15 is interposed between the videosource 11 and the channel 13 and likewise between the monitor 12 and the channel 13. In the basic system, for example, the video processor 14 could have only a transmit facility, and the video converter 15 could have a receiver only facility. Alternatively both video converters could have both the transmit and receive facilities.

The processor 14 receives a signal from the video source for example a camera, EM SYSTEM, data bank etc and converts the source signal into a digitalised form which can be stored at the first location and passed down the land lines 13. The digitalised signal is then received in the processor 15 and stored and held for display on the monitor 12 at the second location.

In the present invention the transmission of a full frame of data over the channel 13 at 64K Baud takes about 2 minutes with a retransmit of faulty blocks.

With reference now to FIG 2 there is illustrated a flow diagram for the processor 14 associated with the video source 11. However it could alternatively be used in the processor 15 with the monitor 12.

The output signal I from the video source 11 is received in the processor 14 by an input buffer 21 which handles conversion of signal levels and format to a suitable form for storage.

This input buffer 12 is fitted only on processors with both a receive and transmit facility. The digitalised input
signal (shown in solid line) is then fed into at least two
independent stores 23 and 24 and a control signal (shown in
dotted line) is fed into an arbitrator 22 which oversees the
microprocessor software for storage of the input signal I. In
the flow diagram signal connections are shown in solid lines and
control connections in dotted lines. The number of stores used
in the processor 14 can be as desired by the end user.

In the present invention two independent stores 23 and 24
are implemented, each have a three port access arrangement with
data rates of up to 75M byte per second on a three channel
system. In a simple receiver only type processor the second
store 24 may be omitted. Two parallel data ports a and b allow
for independent accessing of the store, one port a, for data in
and the other part b, for data out. The third port c, is
connected to a microprocesser 26 by a microprocessor data buss
35 and permits a range of picture processing and data transfer
such as to the second part.

The store controller 25 is a single chip dynamic RAM
controller (Random Access Memory) with extra circuitry to supply
the addresses for the parallel ports a and b. The store
controller 25 buses through the stores 23 and 24. The store
controller 25 is connected for control signals to the
microprocessor 26 which in turn is operated by a simple manually
operated push button key pad 27.

The microprocessor 26 is a Texas Instruments TMS 9995 type processor and provides all the basic operations of the system and monitors its correct functioning, implementing a reset when an error is detected, and can, for example, control the transmit function, or transfer the picture from one quarter to another in the monitor 10. The basic software, also allows contraction and expansion of quarter area pictures with transmission of a quarter picture taking about 30 seconds. The micro processor 26 has two serial communication ports, the first port 28 being asynchronous and providing a test port or a link to another external control panel (not shown) and a second port 29 being fully synchronous and providing the necessary digitalised output signal 'O' connection to the B T Kilostream Modem and Channel 13 (at up to 64 Baud). In order to align and test a processor unit 14 independent of the picture source, the microprocessor 26 is able to generate several test patterns and may overlay the picture with a grid for area identification. The microprocessor 26 as well as providing an overall control for the system has two expansion slots allowing for optional independent additional SCSI format coprocessor 31 and for additional picture storage, and an optional independently buffered Megastream interface 32 with a second external communication line.

The megastream interface 32 provides an up to 2M Baud data rate and a dual port buffering to the serial line to permit concurrent operation of data transfer and other operations. The SCSI format coprocessor interface 32 allows for a second processor and various options for picture storage.

The parallel output ports b are connected for transmitting digital signals from the stores 23 and 24, to a digital analogue converter 33 (DAC) which together with a synchronising signal from a sync pulse generator (SPG) 34 provide the video signal for the video monitor 11 at the first location so that the video monitor can be used for seeing the picture being held in either of the stores 23 and 24.

The input signal I is fed into the input buffer 21 through an input port e, which in the basic unit is fitted with a balanced emitter coupled logic (ECL) receiver allowing the connection of the processor 14 to equipment operating on a separate power supply and which is located some distance away, i.e. a camera or computer. This port can also be modified for each of the systems to which the converter 15 is to be connected, allowing for an internal standard signal set consisting of pixel clock, active line, field drive and field square (for interlaced inputs).

The input buffer 21 is connected in a control circuit with the arbitrator 22 which oversees the store 23 and 24. The stores 23 and 24 may only carry out one function at a time. The stores input ports 'a' are continually open to receive a signal by means of a line register from the input buffer 21 and the store output ports 'b' are continually connected to the monitor 10 from a line register via the DAC33. The microprocessor 26 is in continual conversation with the stores 23 and 24 through the third port c. When the arbitrator 22 receives a control signal that the register at either of the high speed ports (Input port a and output port b) requires storing or refreshing and the microprocessor has to be stopped, the correct address is loaded and data transfered to or from the designated port. The arbitrator 22 stops the microprocessor and decides the next operation i.e. data input, data output, or return to microprocessor control. If both input and output ports have a simultaneous service demand the preferance is given to the input port. The microprocessor 24 can be manually controlled through the key board 27 to control the basic operation of the overall system.

The DAC 33 retrieves the component signals from the stores 23 and 24 and together with the SIG 34 provides the signal for the monitor 10.

When the transmit signal is keyed in at the control 27, the microprocessor 26 causes the designated store 23 or 24 to be read and a copy sent as a digital output signal through the port 29 and into the line 13. Transmission of full frame takes about 2 minutes as the store is copped. The return path to port 29 allows the receiver to acknowledge correct reception or request retransmits.

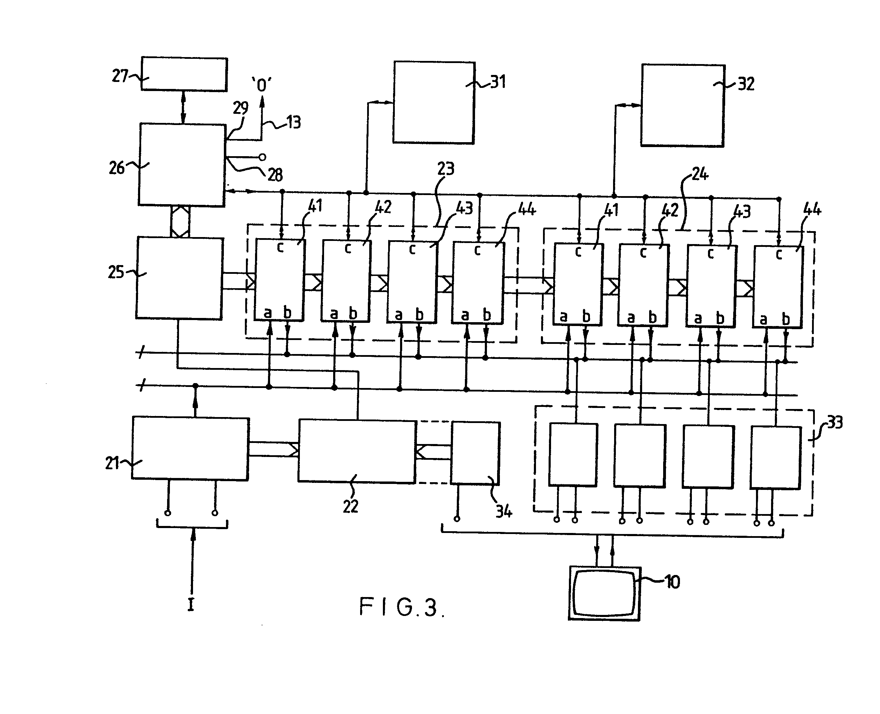

With reference now to FIG 3 there is illustrated a block diagram for the converter 15. The basic components have been explained with reference to the Flow diagrams in FIG 2 and so only specific details will be explained.

The stores 23 and 24 are for a 512 x 512 fixed pixel with 8 bit data for three channels 41,42,43 (Red, Green and Blue) with an option fourth channel 44. The basic store element 41, 42, 43, 44 is a 64K x 1 video DRAM (Dynamic Random Access Memory) (32 off in each store) providing three ports, one port c, to the microprocessor 26 and the other two a and b connected to both input and output as previously described. Control is provided for the ports a and b to allow one store to be loaded while the second is read out.

The DAC 33 is an MC10318 unit and can be used for data rates up to 50 MHz, and has a hybrid output amplifier providing three 75 Ohm output with over a 25MHz Band width. This will allow operation of the video output up to quite high time rates, permitting non-interlaced output, but the basic unit provides for a standard 625, or 525 Broadcast output with a full broadcast specification mixed synchronous signal.

Whilst the processor 14 described above is for transmitting a signal from a video signal source to a monitor 12, (receiving processor 15 operates in a similar manner.

The receiver only version has no input buffer 21 and no signal input into ports a of the stores. The digital signal is loaded into the stores 23 and 24, via the port 29 and the microprocessor only. The picture is then output via port b to the monitor 15 via the DAC33 as previously described. The port 29 on the microprocessor 26 is now used as an input port with its output path being used for control return.

As well as being used to transmit colour pictures from one location to another it is envisaged that the converter could be used for picture archiving on disc, magnetic tape, etc, or alternatively could be connected into a system Eithernet allowing for a common archiving store via a central processor system.

The system could also provide an interface to non-standard picture formats allowing for integration into a common system, for example scanners, picture originator or Vector displays.

Alternatively the colour video output signal could be used in television applications such as video recording, large screen displays, etc.

In use high resolution pictures can be transmitted in about 2 minutes as previously described. However, a quarter picture can be sent in about 30 seconds. Thus if a low resolution picture is all that is necessary a picture can be reduced at the transmitter to 1/4 size, transmitted in about 30 seconds, and then enlarged at the receiver.

Whilst the invention has been described with reference to the above example it will be appreciated by those skilled in the art that minor modifications and alterations may be made without departing from the scope and spirit of the invention.

Claims

1. A method of converting an analogue coloured video signal into storable and readable signals, in which the coloured video signal is converted from its signal source into its component digital signals each of which is stored separately at a first storage facility at a first location, the stored component signals being retrievably held for further processing.

2. A method as claimed in Claim 1, wherein the coloured video signal source is displayed on a monitor also located at the first location.

3. A method as claimed in Claim 1 or Claim 2 wherein the stored component digital signals are transmitted from the first location by land line to a second storage facility at a second location, and said separate component signals being retrievably held in the second storage facility for further processing.

4. A method as claimed in Claim 3 wherein there is a video monitor at the second location and the component signals from the second store facility are recombined into an analogue signal for feeding to the second monitor to form a picture thereon.

5. A method as claimed in any one of Claims 2 to 4, wherein the two storage facilities can handle a 512 x 512 pixel picture with 8 bit data for at least three channels and are interconnected by telecommunications land lines of the type used for data transmission.

6. A method as claimed in Claim 4 or Claim 5 wherein the first and second video monitors are 625 line video sets, or optionally are 525 line video sets.

7. Apparatus for processing a video signal from a video source, and comprising:

(i)     store facilities for independent storage of each component signal of the coloured source signal (ii)    a store controller

(iii)   an arbitrator for overseeing store access.

(iv)    a microprocessor for overall control of the store and for input and output of stored information

(v)     an output port from the store for displaying and transfer of component signals

and (vi)    an input port to the store for reception at high speed of component signals

8. Apparatus is claimed in Claim 7 including a digital analogue connector which is fed by the output port to generate analogue signals.

9. Apparatus as claimed in Claim 7, or Claim 8 wherein the store facilities comprise at least three channels each having a basic store element which is a 64Kx1 Video DRAM.

10. Appartus as claimed in any one of claims 7 to 9, wherein the storage controller is single chip dynamic RAM with extra circuitry to supply addresses for the input port and output port controller.

11. Apparatus as claimed in any one of Claims 8 to 10, wherein the digital analogue converter unit can handle data rates up to 50MHz has a hybrid output amplifier providing three outputs over a 25MHz band width.

12. Apparatus is claimed in any one of Claims 7 to 11 and including a video monitor to monitor the signal from the video source.

13. Apparatus is claimed in any one of claims 7 to 12 when the apparatus includes an input buffer between the store and the source video signal and has a low speed output port from the microprocessor to the land line.

14. Apparatus for processing a video signal substantially as described herein.

15. A method of converting a coloured video signal from an analogue signal in a storable digital signal substantially as described herein.

16. A method of transmitting a coloured stored video picture from one location to another through land lines substantially as described herein.

17. Apparatus for enhancing the signal data transfer handling capabilities of an otherwise relatively low frequency range or bandwidth transmission line; including means for embracing and digesting a relatively high bandwidth or high density data mass, for example a high resolution colour television picture frame; means for breaking down the signal data into component parts of predetermined discrete coherent data blocks; means for arranging the broken down data blocks into serial form; means for storing the serialised data components until transmission; means for sequentially accessing and unloading the data block store at prescribed intervals; means for sequentially transmitting the serialised data components in coherent blocks within the transmission capacity of a prescribed transmission line.

18. An image remote reproduction system comprising an image processing and transmitting device comprising the apparatus as claimed in Claim 17, a transmission line, which may be of low or restricted bandwidth capability, a receiver comprising a compartmented data store for receiving and storing in coherent accessible array the successive data blocks of coherent data, a data check for monitoring the integrity of coherent data blocks received and capable of initiating corrective, for example repetitive tranmission, control action in the event of unacceptable signal degradation, means for rearranging the received serialised coherent data blocks and composing them into an unitary complex data block, representing a processed image, for example a high resolution colour image.

F I G.1.

FIG.2.

FIG.3.

## DOCUMENTS CONSIDERED TO BE RELEVANT

EP 86306929.0

| Category | Citation of document with indication, where appropriate, of relevant passages | Relevant to claim | CLASSIFICATION OF THE APPLICATION (Int. Cl.4) |
|---|---|---|---|
| X | US - A - 4 400 717 (SOUTHWORTH) | 1-4 | H 04 N 7/00 |
| Y | * Abstract; fig. 1,2; column 2, line 33 - column 3, line 39; fig. 15; column 7, line 54 - column 8, line 17 * | 12 | H 04 N 5/76 |
| A | | 7,8, 14-16 | H 04 N 11/00 H 04 N 9/79 |
| | -- | | |
| Y | DE - A1 - 3 202 783 (WRAASE) | 12 | |
| A | * Fig.; page 6, line 12; page 7, line 4 * | 7-9 | |
| | -- | | |
| X | FR - A1 - 2 343 384 (SOCIETE LANNIONNAISE) | 1-4 | |
| A | * Fig.; page 2, line 22 - page 5, line 11 * | 7,9, 14-17 | |
| | -- | | **TECHNICAL FIELDS SEARCHED (Int. Cl.4)** |
| X | US - A - 4 541 008 (FISHMAN) | 1,3,4 | |
| A | * Fig. 3; column 5, line 20 - column 6, line 43; fig. 4; column 8, line 13 - column 9, line 10 * | 7,8 | H 04 N 1/00 H 04 N 5/00 H 04 N 7/00 |
| | -- | | H 04 N 9/00 |
| A | US - A - 4 402 010 (VOGELMAN) | 7 | H 04 N 11/00 |
| | * Abstract; fig. 1,2 * | | |
| | -- | | |
| A | US - A - 4 025 950 (MATSUMOTO) | 17,18 | |
| | * Abstract; fig. 1,2 * | | |
| | -- | | |

The present search report has been drawn up for all claims

| Place of search | Date of completion of the search | Examiner |
|---|---|---|
| VIENNA | 10-12-1986 | BENISCHKA |

European Patent Office

# EUROPEAN SEARCH REPORT

0217564

Application number

| DOCUMENTS CONSIDERED TO BE RELEVANT | | EP 86306929.0 |

| Category | Citation of document with indication, where appropriate, of relevant passages | Relevant to claim | CLASSIFICATION OF THE APPLICATION (Int. Cl.4) |
|---|---|---|---|
| A | US - A - 4 375 650 (TIEMANN) <br>     * Abstract; fig. 7 * <br> -- | 17,18 | |
| A | DE - A1 - 3 031 991 (MICRO CON-SULTANTS) <br>     * Fig. 1; page 8, line 18 - page 9, line 22 * <br> ---- | 17 | |
| | | | TECHNICAL FIELDS SEARCHED (Int. Cl.4) |

The present search report has been drawn up for all claims

| Place of search | Date of completion of the search | Examiner |
|---|---|---|
| VIENNA | 10-12-1986 | BENISCHKA |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82